(19) Europäisches Patentamt
European Patent Office
Office européen des brevets

(11) Numéro de publication: **0 378 952 A2**

(12) **DEMANDE DE BREVET EUROPEEN**

(21) Numéro de dépôt: **89420510.3**

(51) Int. Cl.5: **C08K 5/54, C08L 83/04**

(22) Date de dépôt: **20.12.89**

(30) Priorité: **22.12.88 FR 8817275**

(43) Date de publication de la demande: **25.07.90 Bulletin 90/30**

(84) Etats contractants désignés: **AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Frances, Jean-Marc**
**9, Rue Condorcet**
**F-69100 Villeurbanne(FR)**

(74) Mandataire: **Vogt, Bernard et al**
**RHONE-POULENC CHIMIE Service Brevets**
**Chimie Centre de Recherches des Carrières**
**B.P. 62**
**F-69192 Saint-Fons Cédex(FR)**

(54) **Composition vulcanisable à la température ambiante en élastomère silicone non adhérent.**

(57) Composition comprenant :

a) un α-ω dihydroxypolydiorganosiloxane dont la viscosité est comprise entre 500 et 1 000 000 mPa.s.

b) un produit liquide résultant de l'hydrolyse des composés de formule :

$(R^1O)_3 - Si - R^8$ (1)

c) un catalyseur de réticulation de formule :

$$(R^1O)_{3-a} - \underset{\underset{R^3_a}{|}}{Si} - R^5 - NH - R^2 \qquad (2)$$

avec de préférence $R^5 = -(CH_2)_3-$

Utilisation de cette composition notamment pour la prise d'empreinte et la réalisation de moules.

EP 0 378 952 A2

# COMPOSITION VULCANISABLE A LA TEMPERATURE AMBIANTE EN ELASTOMERE SILICONE NON ADHERENT

La présente invention concerne une composition vulcanisable à la température ambiante (RTV) en élastomère silicone et plus précisément une composition dont les matières la constituant se trouvent dans deux emballages et sont mélangées au moment de l'emploi de cette composition.

De telles compositions sont abondamment décrites dans les brevets de l'art antérieur, notamment par les brevets français n° 2 572 415 et 2 592 657 de la Société Rhône-Poulenc.

Cependant les compositions de l'art antérieur sont souvent auto-adhérentes, c'est-à-dire qu'elles collent, une fois transformées en élastomères, aux supports sur lesquels elles ont été déposées.

D'autre part ces compositions comprennent généralement un catalyseur de réticulation à base d'étain (dilaurate de dibutyl étain par exemple). Or il s'est avéré que cette présence d'étain peut avoir une action néfaste, dans le temps, sur la stabilité des compositions et sur les propriétés des élastomères obtenus. De plus cette présence d'étain peut être gênante, du fait de sa toxicité, lorsque de telles compositions doivent être utilisées pour des applications médicales ou para-médicales, comme par exemple pour la réalisation de prothèses ou de prise d'empreinte dans le domaine dentaire.

Un but de la présente invention est donc l'obtention de compositions vulcanisables à la température ambiante (c'est-à-dire aux environs de 20-25 °C), qui ne sont pas auto-adhérentes (c'est-à-dire que les élastomères obtenus avec de telles compositions n'adhèrent pas sur les supports avec lesquels elles ont été mises en contact) et qui ne comprennent pas de catalyseur de réticulation à base d'étain.

Un autre but de la présente invention est l'obtention de compositions vulcanisables à la température ambiante et dont le temps de prise est compris entre 1 et 180 minutes, de préférence entre 5 et 120 minutes.

Un autre but de la présente invention est l'obtention de compositions vulcanisables à la température ambiante, dont les duretés superficielles en DSA sont comprises, après 24 heures de réticulation, entre 2 et 20.

Un autre but de la présente invention est l'obtention de compositions vulcanisables à la température ambiante et conduisant, après réticulation, à des élastomères qui ne sont pas poisseux.

Un autre but de la présente invention est l'obtention de compositions spécialement bien adaptées pour la prise d'empreintes, dans le domaine médical (dentaire par exemple), artistique ou industriel et permettant ainsi la réalisation de moules.

Il a donc maitenant été trouvé et c'est ce qui fait l'objet de la présente invention des compositions non adhérentes après qu'elles se soient transformées en élastomères avec les supports sur lesquels elles ont été déposées, ces compositions étant caractérisées en ce qu'elles comprennent :

a) un $\alpha$-$\omega$ dihydroxy polydiorganosiloxane dont la viscosité est comprise entre 500 et 1 000 000 mPa.s.

b) un produit liquide résultant de l'hydrolyse des composés de formule :

$(R^1O)_3 - Si - R^8$ (1)

dans laquelle :

- $R^1$ est choisi dans le groupe constitué par des radicaux hydrocarbonés, monovalents en C1 à C12, et les radicaux hydrocarbonés monovalents halogénés en C1 à C12,
- $R^8$ est choisi parmi le groupe constitué par des radicaux alcoyle, halogénoalcoyle, aryle, halogénoaryle, alcényle, cycloalcoyle, cycloalcényle, cyanoalkyle et alcoxy,

c) un catalyseur de réticulation de formule

$$(R^1O)_{3-a} - \underset{\displaystyle R^3_a}{\overset{}{\underset{|}{Si}}} - R^5 - NH - R^2 \qquad (2)$$

dans laquelle :

- a égale 0, ou 1, ou 2, ou 3,
- $R^1$ représente un groupement hydrocarboné en C1 à C12, ou un groupement $R^7{}_3Si$-, dans lequel $R^7$ à la signification de $R^1$,
- $R^5$ représente un groupement alcoylène en C1 à C5,

- $R^3$ représente :
. un groupement alcoyle en C1 à C12, aliphatique, saturé ou non, éventuellement halogéné,
. un groupement - O Si $R^4{}_3$ dans lequel $R^4$ à la signification de $R^1$,
. un groupement cycloalcoyle en C5 à C12, éventuellement substitué par des halogènes,
. un groupement aromatique.
- $R^2$ représente :
. un groupement alcoyle en C1 à C12, saturé ou insaturé,
. un groupement cycloalcoyle en C5 à C12,
. un groupement

$$-(R^6)_n\left[NH - R^5\right]_c - \overset{\displaystyle R^3_b}{\overset{|}{Si}} - (OR^1)_{3-b}$$

dans lequel :
- $R^1$, $R^3$ et $R^5$ ont la signification donnée ci-avant,
- $R^6$ représente un groupement alcoylène en C1 à C6
- n égale 1 à 6
- c égale 0 ou 1
- b égale 0, ou 1 ou 2, ou 3

La composition selon la présente invention comprend a) un $\alpha$-$\omega$ dihydroxy polydiorganosiloxane dont la viscosité est comprise entre 500 et 1 000 000 mPa.s, avantageusement entre 1 000 et 800 000 mPa.s, de préférence entre 2 000 et 400 000 mPa.s.

Cet $\alpha$-$\omega$ dihydroxypolydiorganosiloxane a pour formule

$$OH\left[\begin{matrix} R \\ | \\ SiO \\ | \\ R \end{matrix}\right]_n H \qquad (3)$$

- dans laquelle les radicaux R, identiques ou différents, représentent des radicaux monovalents hydrocarbonés ayant de 1 à 10 atomes de carbone, éventuellement substitués par des atomes d'halogènes ou des groupes cyano. De préférence les radicaux R sont choisis parmi les radicaux méthyle, phényle, vinyle et trifluoro-3,3,3 propyle,
- dans laquelle n a une valeur telle que le polysiloxane de formule (3) ait une viscosité comprise entre 500 et 1 000 000 mPa.s.

Les radicaux R mentionnés ci-avant comprennent :
- les radicaux alkyles et halogénoalkyles ayant de 1 à 10 atomes de carbone tels que les radicaux méthyle, éthyle, propyle isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluore-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalkyles dont les chaînons alkyles ont de 2 à 3 atomes de carbone tels que les radicaux $\beta$-cyanoéthyle et -cyanopropyle.

A titre d'exemples concrets de motifs $R_2SiO$ présents dans l'alpha, oméga dihydroxydiorganopolysiloxane de formule (3) on peut citer :
$(CH_3)_2SiO$,

$CH_3(CH_2=CH)SiO$
$CH_3(C_6H_5)SiO$
$(C_6H_5)_2SiO$,
$CF_3CH_2CH_2(CH_3)SiO$
$NC-CH_2CH_2(CH_3)SiO$
$NC-CH_2-CH_2(CH_2=CH)SiO$
$NC-CH_2CH_2(C_6H_5)SiO$

Il doit être compris que dans la composition selon la présente invention, on peut utiliser comme polymère de formule (3) un mélange constitué de polymères alpha, oméga-di(hydroxy)-diorganopolysiloxanes qui diffèrent entre eux par le poids moléculaire et/ou la nature des groupements liés aux atomes de silicium. Il doit être indiqué de plus que le polymère de formule (3) peut éventuellement comprendre des motifs monoorganosiloxy $RSiO_{1,5}$ et/ou des motifs $SiO_2$, dans la proportion d'au plus 2 % par rapport au nombre de motifs diorganosiloxy $R_2SiO$. En outre le diorganopolyxiloxane peut être un homopolymère ou un copolymère de façon telle qu'il se trouve, par exemple, différents types de motifs dans la chaîne, tels que diméthyle, diphényle, méthyl-phényle, etc....

Ces polymères alpha, oméga-di(hydroxy)diorganopolysiloxanes sont commercialisés ; en outre, ils peuvent être aisément fabriqués selon des techniques maintenant bien connues.

La composition selon la présente invention comprend b) un produit résultant de l'hydrolyse des composés de formule :

$(R^1O)_3$-Si-$R^8$ (1)

dans laquelle :

-$R^1$ est choisi dans le groupe constitué par des radicaux hydrocarbonés, monovalents en $C_1$ à $C_{12}$, et les radicaux hydrocarbonés monovalents halogénés en $C_1$ à $C_{12}$,

- $R^8$ est choisi parmi le groupe constitué par des radicaux alcoyle, halogénoalcoyle, aryle, halogénoaryle, alcényle, cycloalcoyle, cycloalcényle, cyanoalkyle et alcoxy, et dans ce dernier cas $R^8$ est de préférence identique à $R^1O$.

Dans cette formule, les radicaux $R^1$ peuvent être des radicaux alcoyle tels que méthyle, éthyle, propyle, isopropyle, butyle, amyle, isoamyle, octyle, isooctyle, décyle, dodécyle ; des radicaux halogénoalcoyle tels que des radicaux alcoyle chloré, bromé, fluoré. En outre, $R^1$ peut représenter des radicaux aryle, aralcoyle et alcényle tels que vinyle, allyle, phényle, tolyle, xylyle, benzyle, phényléthyle, naphtyle, anthracyle, biphényle, aussi bien que les dérivés halogéno-substitués des radicaux sus-spécifiés. $R^1$ peut encore représenter des radicaux cycloalcényle, cycloalcoyle et cyanoalcoyle.

De préférence on utilise un produit b) liquide résultant de l'hydrolyse de silicates monomères, c'est-à-dire des produits de formule (1) dans lesquels $R^8$ représente un radical alcoxy. De tels produits b) sont obtenus en réalisant une hydrolyse partielle, dans de l'eau, de l'organosilicate particulier monomère en présence de petites proportions d'acide jusqu'à un point où il est encore insoluble dans l'eau et où il est encore possible d'isoler un composé liquide du type organosilicium partiellement hydrolysé. Ainsi, le silicate d'éthyle possédant la formule $(C_2H_5O)_4Si$ peut être partiellement hydrolysé par addition d'acides ou de sels métalliques formant des acides tels que $FeCl_3$, $CuCl_2$, $AlCl_3$, $SnCl_4$ à l'organosilicate monomère liquide, puis mise en oeuvre d'une hydrolyse adéquate de ce mélange d'ingrédients dans de l'eau pour obtenir une composition à deux phases à partir de laquelle l'organosilicate partiellement hydrolysé, insoluble dans l'eau, est facilement séparable à partir de la phase aqueuse et du catalyseur. Un tel silicate d'éthyle partiellement hydrolisé est vendu dans le commerce sous la marque "Ethyl Silicate-40" par l'Union Carbide Corporation.

De manière générale le silicate utilisé est hydrolisé de façon telle que le produit liquide obtenu contienne moins de 10%, avantageusement moins de 6%, de silicate non hydrolisé.

Généralement dans la composition selon la présente invention on ajoute de 1 à 15 parties (en poids), de préférence de 2 à 12 parties du produit liquide b) pour 100 parties de l'$\alpha$-$\omega$ dihydroxypolydiorganosiloxane a) dont la viscosité est comprise entre 500 et 1 000 000 mPa.s.

La composition selon la présente invention comprend comme catalyseur de réticulation le produit c) de formule

$$(R^1O)_{3-a} - \underset{\underset{R^3_a}{|}}{Si} - R^5 - NH - R^2 \qquad (2)$$

dans laquelle les valeurs de a et la signification de $R^1$, $R^2$, $R^3$ et $R^5$ ont été spécifiées ci-avant dans la description. On peut noter ici que si $R^1$ signifie $R^7{}_3$ Si-, dans ce cas les groupes $R^7$ sont généralement identiques entre eux, mais qu'ils peuvent être éventuellement différents entre eux, $R^7{}_3$ Si- pouvant par exemple représenter $(CH_3)_2$ $(C_6H_5)$Si-.

A titre illustratif $R^1$, $R^2$ et $R^3$ peuvent notamment représenter :

- des radicaux alcoyles tels que méthyle, éthyle, propyle, butyle ... docécyle, ces radicaux pouvant être halogénés par exemple par du chlore,
- des radicaux alcényle, tel que vinyle,
- des radicaux cyclopentyle, cyclohexyle,
- des radicaux phényle (sauf pour $R^2$)...

Le groupement alcoylène $R^5$ peut représenter notamment les groupes méthylène $-(CH_2)-$, éthylène $-(CH_2-CH_2)-$, propylène $-(CH_2)_3-$, tétraméthylène $-(CH_2)_4-$, $-CH_2-CH_2-(CH_3)CH-$, $-CH_2-CH(CH_3)-CH_2-$, pentaméthylène $-(CH_2)_5-$, isopentylène $-CH_2-CH_2-(CH_3)CH-CH_2-$. De préférence $R^5$ représente $-(CH_2)_3-$.

La quantité de catalyseur selon la formule (2) introduite dans la composition est telle qu'il puisse catalyser la réticulation avec le temps de prise souhaité et déjà précisé plus avant dans la description. La composition selon la présente invention contient généralement entre 0,05 et 5, de préférence entre 0,1 et 3 milliéquivalents (meq.) de groupement - NH $-R^2$ (du produit selon la formule 2) pour 100 parties (en poids) de l'$\alpha$-$\omega$ dihydroxypolydiorganopolysiloxane a) dont la viscosité est comprise entre 500 et 1 000 000 mPa.s.

Ces silanes aminés de formule (2) peuvent être préparés facilement en utilisant notamment l'enseignement de l'article "Synthesis of 3-amino alkylsilicon compounds" J.L. SPEIER, C.A. ROTH and John W. RYAN, J. ORG. CHEM ; vol 36, n° 21, 1971 pages 3120-3126.

Les compositions selon la présente invention peuvent comprendre une faible quantité d'eau, cette eau étant en quantité généralement inférieure ou égale à 1%, avantageusement inférieure à 0,3 %, de préférence inférieure à 0,2 %, par rapport au poids de l'$\alpha$-$\omega$ dihydroxypolydiorgaonsiloxane utilisé et dont il est question ci-avant en a).

Cette eau peut être ajoutée à la composition ou être apportée à la composition par exemple lorsqu'on lui ajoute une charge qui elle-même contient un peut d'eau.

De façon avantageuse les compositions selon la présente invention comprennent une charge ou un mélange de charges, ainsi qu'éventuellement une huile $\alpha$-$\omega$ bis(trialcoylsiloxy) dialcoylpolysiloxane par exemple $\alpha$-$\omega$ bis (triméthylsiloxy) polydiméthylsiloxane de viscosité généralement plus faible que celle de $\alpha$-$\omega$ dihydroxypolydiorganosiloxane utilisé dont il est question ci-avant en a).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 m2/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydraté ou non), le nitrure de bore, le lithopone, le métaborate de baryum, le sulfate de baryum, les microbilles de verre ; leur surface spécifique est généralement inférieure à 30 m2/g.

Ces charges peuvent avoir été modifiées en surface par traitement avec les divers composés organosiliciques habituellement employés pour cet usage. Ainsi ces composés orgaosiliciques peuvent être des organochorosilanes, des diorganocyclopolysiloxanes, des hexaorgaodisiloxanes, des hexaorgaodisilazanes ou des diorgaocyclopolysiloxanes (brevet français FR-A-1 126 884, FR-A-1 136 885, FR-A-1 236 505 ; brevet anglais GB-A-1 024 234). Les charges traitées renferment, dans la plupart des cas, de 3 à 30 % de leur poids de composés organosiliciques.

Lorsque les compositions selon la présente invention renferment une charge (ou un mélange de charges), elles comprennent généralement, pour 100 parties (en poids) d'$\alpha$-$\omega$ dihydroxypolydiorganosiloxane a), de 1 à 200 parties, de préférence de 5 à 100 parties de charges.

Les compositions selon la présente invention comprennent généralement de 0 à 100 parties d'huile $\alpha$-$\omega$ bis (triacoylsiloxy) dialcoylpolysiloxane (dont il a été question plus avant) pour 100 parties du $\alpha$-$\omega$ dihydroxypolydiorganosiloxane a).

Les compositions selon la présente invention, lorsqu'elles sont mises en contact avec les supports les plus divers, permettent d'obtenir des élastomères qui n'adhèrent pas à ces supports. On a ainsi constaté qu'il n'y a pas d'adhérence avec : l'ivoire (par exemple les dents pour la prise d'empreinte, ou la reproduction de statuettes sculptées), le bois, les métaux (tels que l'aluminium, le fer ...), le verre, les matières plastiques (par exemple le polychlorure de vinyle, les polyamides, le polycarbonate, le polyméthacrylate de méthyle, ...).

Les compositions selon la présente invention peuvent ainsi notamment être utilisées pour la fabrication de moules en élastomères silicones destinés par exemple à reproduire des pièces en matériaux cellulaires ou non, constitués de polymères organiques (polyesters, polyamides, polychlorure de vinyle). Les moules obtenus avec les compositions selon la présente invention se prêtent particulièrement bien pour la reproduction de pièces en polyuréthane, étant donné qu'ils résistent bien à l'attaque des constituants des mélanges permettant l'obtention des polyuréthanes (aux polyisocyanates notamment).

EXEMPLES 1 à 12 :

Les exemples suivants ont été effectués en mélangeant (en poids) tout d'abord, (pour obtenir un premier mélange P1) :

- 100 parties d'une huile α-ω dihydroxypolydiméthylsiloxane de viscosité 14 000 mPa.s à 25° C,
- 70 parties d'une huile α-ω bis (triméthylsiloxy) polydiméthylsiloxane de viscosité 800 mPa.s à 25° C,
- 50 parties d'une silice de combustion de surface spécifique 300 $m^2/g$, traitée par l'hexaméthyldisilazane.
- 50 parties de quartz broyé de diamètre particulaire moyen de 5 micromètres,
- 5 parties d'une silice de combustion de surface spécifique 150 $m^2/g$,
- une quantité d'eau, en grammes, spécifiée dans les tableaux n°1 et 2 ci-après.

A 100 parties de ce mélange P1 sont alors ajoutés :

A) 3,547 g d'un polysilicate d'éthyle hydrolysé comprenant :

0,6 % de Si $(OC_2H_5)_4$
39 % de groupements $(C_2H_5O)_3SiO_{1/2}$
42,4 % de groupements $(C_2H_5O)_2SiO_{2/2}$
18 % de groupements $(C_2H_5O)SiO_{3/2}$
(les 3,547 g de ce polysilicate correspondent ainsi à
1 418 x 3,547 : 100 = 50,3 meq de $OC_2H_5$).

B) 1 meq (milliéquivalent) de -NH - $R^2$ du silane aminé de formule (2), les significations de $R^1$, $R^3$, $R^2$, et les valeurs de a étant précisées dans les tableaux n°1 et 2 ci-après, pour chaque exemple.

Le mélange de A + B est appelé le "système réticulant".

Le mélange de P1 avec le "système réticulant" permet l'obtention d'une composition selon la présente invention.

Dans les tableaux n° 1 et n° 2 ci-après :

- Tp signifie temps de prise, en minutes.

On mesure le temps de prise de la composition en notant la durée pendant laquelle cette composition présente un état suffisamment fluide pour s'étaler sous son propre poids et ainsi prendre la configuration du volume interne des récipients dans lesquels elle est versée.

Le test mis en oeuvre pour apprécier le temps de prise est le suivant :

la composition qui vient d'être obtenue en mélangeant P1 et le "système réticulant" est versée dans une capsule en aluminium, de forme cylindrique, de diamètre 4 cm. La composition versée doit présenter, après une période d'au plus 5 minutes, une surface parfaitement horizontale.

- DSA signifie dureté SHORE A du produit obtenu (élastomère) après 24, 48 ou 72 heures.
- un nombre de jours suivi d'une température (par exemple 7 j à 70° C) signifie que le "système réticulant" a subi ce traitement (de vieillissement) avant d'être mélangé à P1 pour réaliser la composition selon la présente invention, la quantité d'eau utilisée correspondant à celle indiquée juste au-dessus, dans l'exemple considéré.
- contr., pour les exemples 4 et 9, signifie que si $R^2$ est un atome d'hydrogène ou un groupement phényle, nous n'obtenons pas des compositions conformes à la présente invention.

TABLEAU I

$$(R^1O)_{3-a}-\underset{R^3_a}{\underset{|}{Si}}-R^5-NH-R^2 \qquad \text{avec } R^5=(CH_2)_3-$$

| Exemples | a | $R^1$ | $R^3$ | $R^2$ | $H_2O$ g | Tp en mn | DSA 24 h | DSA 48 h | DSA 72 h |
|---|---|---|---|---|---|---|---|---|---|
| 1 | 0 | $-CH_3$ | - | $-(CH_2)_{11}-CH_3$ | 0,18 | 30 | 9 | 16 | 19 |
| 2 | 0 | $-CH_2-CH_3$ | - | $-(CH_2)_{11}-CH_3$ | 0,18<br>7j. 70°C<br>15j. 70°C | 26<br>18<br>20 | 12,5<br>11<br>9 | 16,5<br>15,5<br>15,5 | 19<br>18<br>19,5 |
| 3 | 0 | $-CH_2-CH_3$ | - | $-(CH_2)_7-CH_3$ | 0,18<br>0,11<br>0,075 | 11<br>22<br>38 | 14<br>14,5<br>14 | <br>20<br>19 | 23<br>21,5<br>23 |
| 4 contr. | 0 | $-CH_2-CH_3$ | - | H | 0,18 | 22 | 0 | 2 | 6 |
| 5 | 0 | $-CH_2-CH_3$ | - | $-C(CH_3)_2-CH_2-C(CH_3)_3$ | 0,18 | 120 | 2,5 | 10 | 17 |
| 6 | 3 | - | $-OSi(CH_3)_3$ | $-(CH_2)_7-CH_3$ | 0,18 | 60 | 17 | 20 | 24 |
| 7 | 1 | $-CH_3$ | $-CH_3$ | $-(CH_2)_7-CH_3$ | 0,18 | 20 | 10,5 | 17 | 20 |

TABLEAU II

$$(R^1O)_{3-a} - \underset{\displaystyle R^3_a}{\overset{}{Si}} - R^5 - NH - R^2$$

avec $R^5 = -(CH_2)_3-$

| Exemples | a | $R^1$ | $R^3$ | $R^2$ | $H_2O$ g | Tp en mn | DSA 24 h | DSA 48 h | DSA 72 h |
|---|---|---|---|---|---|---|---|---|---|
| 8 | 0 | $-CH_2-CH(C_2H_5)-(CH_2)_3-CH_3$ | - | $-(CH_2)_{11}-CH_3$ | 0,18 | 12 | 17 | 20 | |
| 9 contr. | 0 | $-CH_3$ | - | $-C_6H_5$ | 0,18 | - | 0 | 0 | 0 |
| 10 | 0 | $-CH_2-CH_3$ | - | $-(CH_2)_7-CH_3$ | 0,18<br>7j. 70°C<br>15j. 70°C | 21<br>19<br>16 | 12,5<br>11,5<br>11 | 18,5<br>17<br>18 | 19,5<br>18,5<br>19 |
| 11 | 0 | $-CH_2-CH_3$ | - | $-(CH_2)_3-CH_3$ | 0,18<br>7j. 70°C | 16<br>14 | 13<br>12,5 | 18<br>17,5 | 21,5<br>20 |
| 12 | 0 | $-CH_2-CH_3$ | - | $-C_6H_{11}$<br>-(cyclohexyle) | 0,18<br>7j. 70°C | 36<br>32 | 6<br>5,5 | 16,5<br>11 | 19,5<br>15 |

EXEMPLE 13 :

A un mélange P2 constitué de :
- 100 parties d'une huile α-ω dihydroxypolydiméthylsiloxane de viscosité 14 000 mPa.s à 25° C.
on ajoute :

A) 3,547 g d'un polysilicate d'éthyle hydrolysé tel que défini dans les exemples précédents,

B) 1 meq (milliéquivalent de -NH-$R^2$ du silane aminé de formule (2) où $R^1$ = $CH_3$-$CH_2$- ; $R^2$ = $CH_3$-$CH_2$-$CH_2$-$CH_2$- ; a = 0

Le mélange de A + B est appelé le "système réticulant"
Le mélange de P2 avec le "système réticulant" permet l'obtention d'une composition selon la présente invention.

Le temps de prise Tp a la même signification que pour les exemples précédents et on opère de façon identique pour mesurer la dureté SHORE A du produit obtenu (DSA de l'élastomère)
Tp = Temps de prise 88 minutes à 20° C
Dureté Shore A :
après 24 h Dessus Face à l'air 10
Dessous Face confinée 5
après 48 h Dessus Face à l'air 12
Dessous Face confinée 7

EXEMPLE 14

On procède de la même façon qu' à l'exemple 13, si ce n'est que la quantité de silane aminé de formule (2) est réduite à 0,5 meq (milliéquivalent de-NH-$R^2$)

On trouve un temps de prise Tp = 168 minutes à 20° C.
Dureté Shore A :
après 24 h Dessus Face à l'air 7
Dessous Face confinée 1
après 48 h Dessus Face à l'air 12
Dessous Face confinée 5

**Revendications**

1. Composition vulcanisable à la température ambiante en élastomère silicone non adhérent, caractérisée en ce qu'elle comprend :

a) un α-ω dihydroxypolydiorganosiloxane sont la viscosité est comprise entre 500 et 1 000 000 mPa.s.

b) un produit liquide résultant de l'hydrolyse des composés de formule :
$(R^1O)_3$ - Si - $R^8$ (1)
dans laquelle :
- $R^1$ est choisi dans le groupe constitué par des radicaux hydrocarbonés, monovalents en C1 à C12, et les radicaux hydrocarbonés monovalents halogénés en C1 à C12,
- $R^8$ est choisi parmi le groupe constitué par des radicaux alcoyle, halogénoalcoyle, aryle, halogénoaryle, alcényle, cycloalcoyle, cycloalcényle, cyanoalkyle et alcoxy,

c) un catalyseur de réticulation de formule

$$(R^1O)_{3-a} - \underset{\displaystyle R^3_a}{\underset{|}{Si}} - R^5 - NH - R^2 \qquad (2)$$

dans laquelle :

- a égal 0, ou 1, ou 2, ou 3,
- $R^1$ représente un groupement hydrocarboné en C1 à C12, ou un groupement $R^7{}_3Si$-, dans lequel $R^7$ à la signification de $R^1$,
- $R^5$ représente un groupement alcoylène en C1 à C5,
- $R^3$ représente :

. un groupement alcoyle en C1 à C12, aliphatique, saturé ou non, éventuellement halogéné,
. un groupement - O Si $R^4{}_3$ dans lequel $R^4$ à la signification de $R^1$,
. un groupement cycloalcoyle en C5 à C12, éventuellement substitué par des halogènes,
. un groupement aromatique.

- $R^2$ représente :

. un groupement alcoyle en C1 à C12, saturé ou insaturé,
. un groupement cycloalcoyle en C5 à C12,
. un groupement

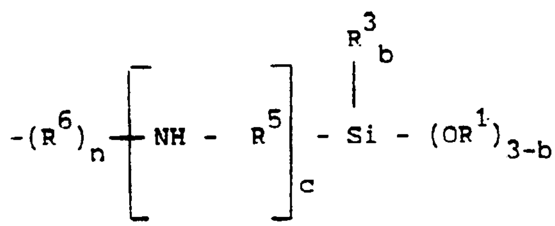

dans lequel :

- $R^1$, $R^3$ et $R^5$ ont la signification donnée ci-avant,
- $R^6$ représente un groupement alcoylène en C1 à C6
- n égale 1 à 6
- c égale 0 ou 1
- b égale 0, ou 1 ou 2, ou 3

2. Composition selon la revendication précédente caractérisée en ce que $R^8$ représente un groupement alcoxy et est de préférence identique à $R^1O$.

3. Composition selon l'une quelconque des revendications précédentes, caractérisée en ce qu'elle comprend de plus une faible quantité d'eau.

4. Composition selon l'une quelconque des revendications précédentes caractérisées en ce qu'elle comprend une charge.

5. Composition selon la revendication 4, caractérisée en ce que la charge comprend de la silice.

6. Composition selon l'une quelconque des revendications précédentes caractérisée en ce que le produit b) résulte de l'hydrolyse d'un silicate d'alcoyle et contient moins de 10 % de ce silicate non hydrolysé.

7 Composition selon l'une quelconque des revendications précédentes caractérisée en ce que le produit b) résulte de l'hydrolyse du silicate d'éthyle $Si(OC_2H_5)_4$.

8. Composition selon la revendication 7 caractérisée en ce que le produit b) résulte de l'hydrolyse de silicate d'éthyle et contient moins de 6 % de ce silicate non hydrolysé.

9. Composition selon l'une quelconque des revendications précédentes caractérisée en ce qu'elle comprend (en poids) pour 100 parties d'un $\alpha$-$\omega$ dihydroxypolydiorganosiloxane a) dont la viscosité est comprise entre 500 et 1 000 000 mPa.s :

- 1 à 15 parties d'un produit liquide résultant de l'hydrolyse de composés de formule (1),
- 0,05 à 5 milliéquivalents de groupement - NH - $R^2$ du produit selon la formule (2),
- de 0 à 1 partie d'eau,
- de 0 à 200 parties de charge,
- de 0 à 100 parties d'huile $\alpha$-$\omega$ bis(trialcoylsiloxy)diorganopolysiloxane.

10. Composition selon l'une quelconque des revendications précédentes caractérisée en ce que $R^5$ représente le groupement $-(CH_2)_3-$.

11. Utilisation des compositions selon l'une quelconque des revendications précédentes pour la prise d'empreintes et pour la réalisation de moules.